# EUROPEAN PATENT APPLICATION

(11) **EP 3 689 824 A1**
(43) Date of publication of application: **05.08.2020**
(21) Application number: 20154320.4
(22) Date of filing: 29.01.2020
(51) Int. Cl.: C01G 9/02

(54) **METHOD OF PRODUCING ZINC OXIDE PARTICLES**

(30) Priority: 29.01.2019 WO PCT/EP2019/052050
(71) Applicant: IBU-tec advanced materials AG, 99425 Weimar (DE)
(72) Inventor: Klaus, Christian, 07743 Jena (DE); KHALIL, Tarek, 99423 Weimar (DE); Ommer, Matthias, 07749 Jena (DE)
(74) Representative: Liedtke & Partner Patentanwälte

(57) **Abstract**

The invention relates to a method of producing zinc oxide particles (P). The method of producing zinc oxide particles (P) comprises the steps of feeding a preheated zinc-containing solution as a raw material RM over at least one feed location (FL1 to FLn) into at least one treatment zone of a hot gas stream HGS in a reactor (1); and subjecting the raw material RM in the at least one treatment zone to a thermal treatment by the hot gas stream HGS for formation of zinc oxide particles (P), wherein the raw material (RM) is heated during and/or prior to feeding into the hot gas stream HGS to prevent crystallization outside of the at least one treatment zone.

## Description

The invention relates to a method of producing zinc oxide particles, a reactor for producing zinc oxide particles and usage of a reactor to produce zinc oxide particles.

Metal oxides, such as zinc oxides, have a wide range of applications such as reactive surfaces or catalysts. In these areas, atoms and molecules on the surface of substances are especially crucial. They have partly different physical and chemical properties compared to the atoms and molecules inside a solid.

Nanoparticles typically have an average primary particle or grain size of 10 nm to a few 100 nm. They have, unlike larger solids with a higher volume, a surface-to-volume-ratio, which is strongly supported in favour of the surface. Due to this ratio, the physical and chemical properties of nanoparticles often differ from the physical and chemical properties of larger solids.

For the production of nanoparticles different production methods are known. For example chemical production methods in solutions, production methods in plasma or production methods from the gas phase are known. Similarly, a production of nanoparticles by means of a pulsating thermal treatment by a pulsating hot gas stream in a so-called pulsation reactor is known. In this case, a raw material is fed directly into a combustion chamber before the raw material is treated by the pulsating hot gas. The raw material can be fed as a solution, foam, suspension or in a solid state into the combustion chamber.

It is an object of the present invention to provide an improved method of producing zinc oxide particles. It is further an object of the present invention to provide an improved reactor for producing zinc oxide particles.

Preferred embodiments of the invention are given in the dependent claims.

The object is achieved by a method of producing zinc oxide particles, in particular nanoparticles, according to claim 1. With regard to an improved reactor the object is achieved by a reactor according to claim 14 for producing zinc oxide particles.

The method of producing zinc oxide particles comprises the steps of feeding a heated zinc-containing solution as a raw material over at least one feed location into at least one treatment zone of a hot gas stream in a reactor and subjecting the raw material solution in the treatment zone to a thermal treatment by the hot gas stream for the formation of zinc oxide particles, wherein the raw material is heated to a predetermined temperature during and/or prior to feeding into the hot gas stream to feed respectively heated raw material into the hot gas stream.

In an exemplary embodiment, the hot gas stream is a pulsating, oscillating or swinging hot gas stream wherein the raw material solution feeds into said pulsating, oscillating or swinging hot gas stream. In particular, the flow velocity of the hot gas stream primary oscillates. For instance, pressure amplitudes and/or velocity amplitudes vary, e.g. oscillate or swing.

In an exemplary embodiment, the raw material is heated to the predetermined temperature during and/or prior to feeding into the reactor to prevent crystallization outside of the treatment zone. In an exemplary embodiment, the heating of the raw material takes place, for example, by a solution heat of a zinc compound, e.g. zinc oxide. The solution heat is generated by dissolving zinc oxide in a liquid. In the event that the temperature is not high enough, there may be an increase or a hold of the temperature by, for example, a hot plate, a heating jacket and/or a tempered and/or double-walled container. The solution can be stirred continuously and can be covered against the atmosphere.

According to another embodiment, a desired or predetermined temperature of the raw material is set during and/or prior to feeding of the raw material into the treatment zone. In particular, the temperature of the raw material can be measured and controlled during and/or prior to feeding into the reactor. In the event that the measured temperature of the raw material during and/or prior to feeding into the reactor is below the desired or predetermined temperature, intermediate heating are provided. For instance, the temperature of the raw material may be increased or hold by intermediate heating, e.g. by hot plate and/or heating jacket coupled to the reactor wall and/or feeding structures and/or tempered reactor wall or tempered feeding structures, e.g. feeding pipes.

A particular advantage of the described method compared to the state of the arts is the prevention of crystallization of the raw material during and/or before feeding the respectively heated raw material into the reactor, exemplary a pulsation reactor. The feeding can be done exemplary by a nozzle, in particular a two-fluid nozzle, by heating the raw material and/or the carrier gas during and/or prior to feeding into the reactor. Thus, it is possible to increase the amount of zinc in a raw material solution without crystallization outside of the pulsation reactor, thus ensuring a higher throughput and an increased efficiency. Moreover, clogging of devices of feeding on the feed location, exemplary nozzles, is prevented.

It is also possible, that the raw material is heated to and/or held at a temperature of at least 60 °C and at most 80 °C during and/or prior to feeding into the pulsation reactor. A heating of the raw material to a temperature of 100 °C and above should be prevented. Moreover, a temperature of over 80 °C, in particular over 70 °C, for a longer period of time should also be prevented. Thus a crystallization of the zinc oxide due to an evaporation of the zinc solution can be avoided.

Moreover, the solution may be stored in a closed container, thus avoiding evaporation or concentration.

Moreover, the raw material can be fed into the pulsation reactor by using a carrier fluid. By using a carrier fluid, the raw material solution can be sprayed on the feed location into the treatment zone of the pulsation reactor, thus creating an increased surface and/or smaller droplets. The increased surface leads to an improved treatment by the hot gas stream, e.g. a pulsating hot gas stream.

The carrier fluid can be additionally heated to a temperature of at least 35 °C and at most to the temperature of the raw material during and/or prior to feeding into the reactor. Thus, the temperature of the carrier fluid may be adjusted so that the raw material does not cool below a crystallization temperature. In addition, it should be avoided that the carrier fluid is so hot that the heat in the nozzle causes the solution to boil. In addition, the temperature may be dependent on the flow rate of the raw material and the carrier fluid, thereby avoiding crystallization outside of the at least one treatment zone and/or feeding system, e.g. a nozzle with a pump.

In addition, it is conceivable, that the raw material is formed by dissolving zinc oxide in a liquid, wherein the liquid is heated to at least 30 °C, in particular to at least 35 °C prior to the addition of the zinc oxide. Thus it is possible, that a zinc-containing solution as a raw material with a high concentration of zinc is achieved.

It is possible as well, that the liquid is a mixture comprising an acetic acid and demineralized water. Moreover, a 60% acetic acid can be used for the liquid for dissolving zinc oxide, wherein the acetic acid, the demineralized water and the zinc oxide are mixed. Moreover, the mass ratio of the mixture may be the acetic acid to demineralized water to zinc oxide is about 7:5: at most 3. In another exemplary embodiment it is possible, that the acetic acid of the mixture is a so called glacial acetic acid, an acetic acid with 99% to 100% acetic acid, which can be used for the liquid for dissolving zinc oxide, wherein the acetic acid, the demineralized water and the zinc oxide are mixed. Moreover, the mixture may comprise 28 % ± 1 % of acetic acid, 52 % ± 1 % of demineralized water and at most 20 % ± 1 % zinc oxide. Moreover, a 30 % to 60 % acetic acid can be used. With the mixture of said mass ratio around or less three of acetic acid to demineralized water to zinc oxide with the aforementioned compounds and/or with the mixture of said percentages it is possible to dissolve a large quantity of zinc oxide while crystallization can be prevented. At a mass ratio of less than or around three and/or with a maximum content of less or equal 20 %, the prevention of crystallization can be additionally secured.

Furthermore the raw material can be fed to the pulsation reactor at an exemplary rate of between 75 and 90 kilograms per hour. This allows a high throughput while a differential pressure or even potential damage occurring to a filtration system to filter zinc oxide particles out of the reactor is held at a minimum. Other feeding rates are also conceivable. Moreover, it is possible that the pulsation reactor is used with a separation device comprising two filters, wherein the two filters are used separately. By using one of the two filters for separating, the other one of the two filters can be cleaned. By exchanging the two filters of the separation device, the feeding rate can be increased, for example over 100 kilograms per hour. In an exemplary embodiment, the filter may be a cartridge filter or a bag filter.

In addition, it is conceivable, that a reaction, i.e. the formation of zinc oxide particles takes place in a treatment zone within a combustion chamber of the pulsation reactor due to the thermal treatment. It is also conceivable, that the formation of zinc oxide particles takes place in a treatment zone within a reaction space section, exemplary a resonance tube of the pulsation reactor. By varying the location of the treatment zone, it is possible to adapt the described method to different types of pulsation reactors.

Moreover, there can be a further treatment of the zinc oxide particles formed which takes place in the reaction space section, for example a resonance tube. Thus, a further drying process of the zinc oxide particles to remove remains of the raw material is not necessary.

It is possible, that a drop in temperature is caused by a cooling air system at the end of the reaction space section, thus causing a termination of the thermal treatment. By termination of the thermal treatment due to a drop in temperature, it is possible to control the primary particles size of the zinc oxide particles.

According to another aspect of the present disclosure a reactor for producing zinc oxide particles using the above described method is provided, the reactor configured to generate a hot gas stream and comprising:
- a treatment zone configured to be subjected to the hot gas stream,
- at least one feed location configured to feed a raw material into the hot gas stream, and
- means for heating the raw material during and/or prior to feeding into the hot gas stream.

The reactor is configured as a thermal reactor, e.g. a pulsation reactor. The hot gas stream is e.g. a pulsating, oscillating or swinging hot gas stream.

The raw material may be heated or held at a predetermined temperature by solution heat and/or by a heater, for example, a hot plate, a heating jacket and/or a tempered and/or double-walled container.

In an exemplary embodiment, the at least one feed location is configured to feed a carrier fluid carrying the raw material into the reactor, wherein a heater is arranged for heating the carrier fluid during and/or prior to feeding into the reactor. In an exemplary embodiment, the heater may be operated electrically or by exhaust heat of the reactor.

According to another aspect of the present disclosure a use of a reactor, e.g. a drop tube reactor or an entrained-flow reactor or a pulsation reactor, for producing zinc oxide particles within a hot gas stream of the reactor is provided.

A raw material with the specific composition of 28% ± 1% of acetic acid, 52% ± 1% of demineralized water and at most 20% ± 1% zinc oxide will be applied.

Due to the specific preheated raw material and feeding of this specifically preheated raw material into the hot gas stream of the reactor, zinc oxide particles can be surprisingly produced within the hot gas stream of the reactor. Further, the preheating enables a high percentage of zinc, which will influence and improve yields and product characteristics.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

The present invention will become more fully understood from the detailed description given herein below and the accompanying drawings which are given by way of illustration only, and thus, are not limited of the present invention, and wherein:
- Figure 1: shows a schematic representation of a reactor used for the formation of zinc oxide particles,
- Figure 2: shows a diffractogram of a reference zinc oxide particle with a hexagonal zincite crystal structure obtained by using X-ray analysis and
- Figure 3: shows a diffractogram of the exemplary embodiment obtained by using X-ray analysis.

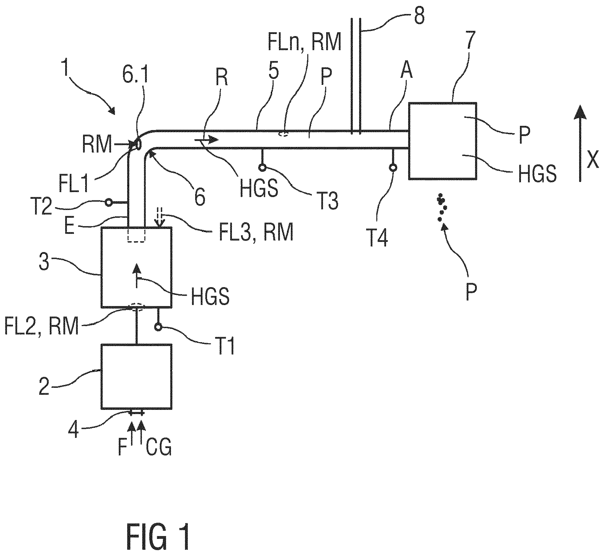

**Figure 1** shows a schematic structure of a reactor 1 used for a method of producing zinc oxide particles P. The method of producing zinc oxide particles P comprises the steps of:
a) Feeding a zinc-containing solution as a raw material RM over at least one feed location FL1 to FLn into at least one treatment zone of a hot gas stream HGS in the reactor 1, and
b) Subjecting the raw material RM in the treatment zone to a thermal treatment by the hot gas stream HGS for formation of zinc oxide particles P, wherein the raw material RM is heated to a predetermined temperature during and/or prior to feeding into the hot gas stream HGS to feed respectively heated raw material RM into the hot gas stream HGS.

The reactor 1 is configured as a thermal reactor e.g. a drop tube reactor; a entrained-flow reactor or a pulsation reactor. The hot gas stream HGS in a pulsation reactor is e.g. a pulsating, oscillating or swinging hot gas stream.

The reactor 1 is in particular a thermal reactor for producing fine particles P, especially nanocrystalline particles P. For example, the particles P produced from at least one raw material RM, e.g. a solution, in particular a zinc-containing solution, have a nanocrystalline structure and/or a nanoscale structure with an average particle size of 10 nm to 100 nm in the end product.

The treatment zone is arranged behind at least one of the feed locations F1 to FL in a flow direction R of the hot gas stream HGS. The treatment zone is the resulting volume in which the hot gas stream HGS and the raw material RM reside within the reactor 1 until termination of the thermal treatment. Depending on the location of the feed location FL1 to FLn, the burner 3 and/or a reaction space section 5 may be part of the treatment zone.

The thermal reactor 1 is designed, for example, as a pulsation reactor 1 in which the particles P are formed in the treatment zone with the hot gas stream HGS, e.g. a pulsating hot gas stream. For this purpose, the pulsation reactor 1 comprises a burner 2 and a combustion chamber 3 subsequent to the burner 2 for generating the e.g. pulsating hot gas stream. In this case, combustion gases CG and at least one fuel F are injected via a feed 4 together or separately into the burner 2 and via the burner 2 into the combustion chamber 3.

In particular, a combustible gas, such as natural gas and/or hydrogen, is supplied as fuel F. It is also conceivable that another suitable gas can be supplied as fuel gas.

As the combustion gas CG, for example, one or more of ambient air, oxygen, etc. are used. The supplied combustion gases CG and fuels F are ignited, for example, in the combustion chamber 3. The resulting flame pulsates due to a self-excited periodic-transient combustion and generates a pulsating hot gas stream HGS in the combustion chamber 3. The e.g. pulsating hot gas stream HGS flows from the combustion chamber 3 on the outflow side into the reaction space section 5.

The fuel F and the necessary combustion gas CG are supplied together, for example premixed, or separately via feed 4 and burner 2 to the combustion chamber 3 and ignited within the combustion chamber 3. As a result, the fuel F and the combustion gas CG burn rapidly and generate a pressure wave in the direction of the reaction space section 5, for example in the direction of a resonant tube. Due to the lower flow resistance in the direction of the reaction space section 5, the propagation of a pressure wave takes place.

During the acoustic oscillation curve, the pressure in the combustion chamber 3 is reduced so that new fuel gas or fuel gas mixture or new fuel F and combustion gas CG can flow in. This process of the subsequent flow through pressure fluctuations takes place automatically and periodically. The pulsating combustion process in the combustion chamber 3 generates the e.g. pulsating hot gas stream HGS, which is characterized by a high degree of turbulence. The high flow turbulence and the constantly changing flow velocity prevent the construction of an insulating gas envelope (boundary layer) around the particles P, which are formed by the raw material RM, whereby a higher heat transfer and mass transfer (between raw material and hot gas), heat and mass transfer as a faster reaction at relatively lower temperatures, is possible. Typically the residence time is less than one second to a few seconds but different residence times are possible. In addition, a particularly large proportion of the formed particles P reach a desired spherical shape. The rapid reaction also results in the formation of the solid phase of the particles P to particular material properties (for example, to a nanocrystalline form with a high reactivity of the formed particles P). For the deposition of the particles P as reaction product from the hot gas stream HGS, one or more suitable separation devices 7 for fine particles P or ultrafine particles adjoins the reaction space section 5, at least indirectly.

The frequency of the e.g. pulsating hot gas stream HGS is in the Hertz range, in particular in a range of a few hertz, for example greater than 5 Hz, in particular greater than 50 Hz, for example in a range from 5 Hz to 350 Hz. Parameters of the hot gas stream HGS, such as amplitude and/or frequency of the vibration, are adjustable. This can take place via the combustion parameters, such as fuel quantity, air quantity, air temperature, fuel temperature and/or flame temperature, location of the fuel/air application and/or via proportions and/or changes of these from combustion chamber 3, burner 2 and/or reaction space section 5.

The reaction space section 5 is formed, for example, as a resonance tube. The combustion chamber 3 is designed as a combustion chamber whose dimensions, in particular its diameter, is greater than the dimensions, in particular the diameter, of the reaction space section 5.

In Figure 1, as an exemplary representation of a device used for the method of producing zinc oxide particles, the combustion chamber 3 and the reaction space section 5 are arranged substantially perpendicular to each other. The combustion chamber 3 is arranged substantially vertically. The reaction space section 5 is arranged horizontally to the combustion chamber 3. Any other suitable arrangement is also possible.

An elbow pipe 6 is arranged between the combustion chamber 3 and the reaction space section 5, which fluidly connects the combustion chamber 3 and the reaction space section 5. In an elbow area 6.1 of the elbow pipe 6 at least one raw material RM is fed, e.g. at a feed location FL1.

It is also conceivable, that instead of an elbow pipe 6, a straight element, which is not shown in detail, connects the combustion chamber 3 and the reaction space section 5. Moreover, it is conceivable, that the feed of the raw material RM is carried out in the straight element or the combustion chamber 3. For example, in the elbow area 6.1 the at least one raw material RM is fed in the form of a raw material solution or raw material suspension. The feed of the raw material RM takes place in the elbow area 6.1 in the flow direction R and/or parallel to the flow direction R of the e.g. pulsating hot gas stream HGS. Other possibilities of feed locations of the raw material RM in relation to the flow direction R of the pulsating hot gas stream HGS are also conceivable.

The elbow pipe 6 is formed, for example, as an angled tube, in particular as an L-shaped tube (so-called L-connector). In particular, the elbow pipe 6 is angled at 90 ° and has the elbow area 6.1 and an inner arc in a curved region.

The feed of the raw material RM is thus carried out directly into the combustion chamber 3. It is possible as well, that the feed of the raw material RM is carried out at the upper end of the combustion chamber 3, for example at the transition from the combustion chamber 3 to the reaction space section 5 and outside of the combustion chamber 3 directly into the combustion chamber 3. In particular, the addition of the raw material RM into the hot gas stream HGS takes place through a nozzle.

It is possible, that a mixture of a carrier fluid and a raw material RM can be fed through the feed location with the nozzle, in particular through a two-substance nozzle. The carrier fluid in the present case is a gaseous fluid such as air, in particular compressed air. The addition of the raw material RM into the hot gas stream HGS may take place through a nozzle, e.g. parallel to the flow direction R in the region of the elbow area 6.1 of the elbow pipe 6. The raw material RM in the exemplary case is zinc-containing liquid, in particular a liquid in which zinc oxide has been dissolved, for example a zinc acetate solution. Other liquids in which zinc, zinc oxide or other zinc-containing solids have been dissolved are conceivable.

In this case, at least one feed location FL1 for adding the raw material RM, is provided in the elbow area 6.1. For example, in the elbow area 6.1, the raw material RM can be fed in the form of a raw material solution or raw material suspension through a two-substance-nozzle.

In addition, the raw material RM can be fed from the direction of the burner 2 into the combustion chamber 3 via a feed location FL2. Alternatively or additionally, the raw material RM can be fed in other places of the combustion chamber 3, for instance via a feed location FL3. The raw material RM can also be fed alternatively or additionally into the adjoining reaction space section 5, in particular into the resonance tube, via the feed location FL1. For this purpose, the reactor 1 may have further feed locations FL2 to FLn in the region of the combustion chamber 3, for example at the flow inlet-side end, and/or along the reaction space section 5.

In a conceivable embodiment, a feed location FL2 is arranged in the region of the burner 2, in particular at the outlet of the burner 2, in such a way that the raw material RM is fed at the end of the combustion chamber 3 which is at the flow inlet. As a result, a substantially high temperature gradient can be generated, wherein the raw material RM heats up faster. In particular, a heating speed can be increased by arranging the feed location FL2 in the area of the burner 2 and at the flow-inlet-side end of the combustion chamber 3. Depending on the raw material RM, temperature gradient, treatment temperature and/or further operating conditions a production of a particularly amorphous product having many lattice defects with high catalytic activity, or a crystalline product such as zinc oxide nanoparticles P can be achieved.

Furthermore, sticking, adhesion and/or clogging of the substance by means of spraying the raw material RM, for example in the form of a liquid, into an open space is at least largely prevented.

Thus, the combustion chamber 3 can form a reaction space by itself. In general, the fast combustion and/or explosion takes place in the combustion chamber 3 as well as the generation of the e.g. pulsating hot gas stream HGS. In contrast, usually no combustion of the fuel F takes place in the reaction space section 5. But it is also possible, in particular at the entrance of the reaction space section 5 and thus in the region of the upper end of the combustion chamber 3 to additionally supply fuel F and/or combustion gas CG as an intermediate firing. It is likewise possible to feed raw material RM into the combustion chamber 3 via the feed location FL2. In this case, the combustion chamber 3 is also used as part of the treatment zone for the formation of particles P.

The reaction space section 5 can optionally be formed widened with respect to an input line E and an outlet line A for the e.g. hot gas stream HGS. The input line E is formed as a one- or multi-part pipe arrangement and connects the combustion chamber 3 to the reaction space section 5. The elbow pipe 6 is in particular part of the input line E. The output line A is formed as a one- or multi-part pipe arrangement and connects the reaction space section 5 with one or more separation devices 7.

Depending on the design of the reaction space section 5, this can serve as part of the treatment zone, in particular when using a further feed location, and/or as a cooling space. If the reaction space section 5 is used to introduce colder gases, then the reaction space section 5 serves as a cooling space for terminating the thermal treatment. Colder gases can for example be introduced by a cooling air system 8. A drop of temperature can be down to 720 °C.

The one or more separation devices 7 are connected indirectly downstream via the outlet line A to the reaction space section 5. The raw material RM is guided and transported by means of the e.g. hot gas stream HGS of the at least one material feed location, in particular in the combustion chamber 3 and/or the elbow pipe 6, over the reaction space section 5 to form the particles P on the way to one or more separation devices 7.

When feeding the raw material into the feed location, in particular in the feed location FL2 on the combustion chamber 3 through the nozzle, the raw material RM is sprayed into the combustion chamber 3 as small droplets by using the carrier fluid. By this change of the surface-volume ratio, it is possible that the pulsating hot gas stream HGS performs a thermal treatment on an enlarged surface, while within the volume of the droplets of the raw material RM, a constant amount of zinc is present. From this amount of zinc, the zinc oxide particles are formed. Moreover, the temperature in the treatment zones behind the feed location FL1 to FLn can be higher than 600 °C. If, in another exemplary embodiment, the feed location position is changed, the temperature in the reactor is adapted, so that the temperature at the actual feed location sites is greater than 600 °C.

In addition, the transport through the reaction space section 5 by the e.g. pulsating hot gas stream HGS results in a further effect of a thermal treatment on the raw material RM and the particles P formed. The further effect of the thermal treatment can be, but is not limited to, a drying process of the particles and/or remains of the raw material RM

Moreover, the particles P formed in the combustion chamber 3 and/or the reaction space section 5 and/or the separation device 7 can agglomerate due to the e.g. pulsating hot gas stream HGS.

The separation device 7 is, for example, one or more centrifugal separators and/or gravity separators and/or filters, in particular a hot gas filter. From the separation device 7, the formed particles P are deposited and collected, for example, in non-illustrated collecting containers. In an exemplary embodiment, a separation device comprises two filters, which can be switched alternately inside and outside of the hot gas stream HSG. Thus, a first filter, which is not inside the hot gas stream HSG, can be cleaned until a second filter, which has been inside the hot gas stream HSG is switched with the first filter. Thus, it is possible to clean the filters more efficiently while maintaining a certain differential pressure, thus can be increasing a throughput of the raw material RM

Due to the hot gas stream HGS flowing out as a result of the combustion into the reaction space section 5, a negative pressure is produced in the combustion chamber 3 and the overpressure is thus reduced, so that inflowing combustion gases CG and/or fuels F ignite themselves. This process of the subsequent flow by pressure and negative pressure is carried out automatically and periodically. The pulsating combustion process in the combustion chamber 3 releases energy with the propagation of a pressure wave in the reaction space and thus in the resonance tube, where it excites an acoustic oscillation.

The fine particles P formed in the hot gas stream HGS then pass into the separation device 7, which indirectly connects to the reaction space section 5. In the separation device 7, for example, the powder deposition takes place, by separating the formed particles P from the hot gas stream HGS.

Moreover, several devices for checking parameters of the reactor 1 may be attached. Temperature control units T1, T2, T3 and T4 can be used to check a temperature within the reactor 1. The temperature control devices can be designed for example as a thermocouple in the hot gas stream HGS.

In addition, various other devices for checking parameters and for controlling the parameters and/or units of the reactor 1 may be attached in a manner not shown. These can for example record and/or control a flow rate for products or a pressure in the pulsation reactor 1.

Furthermore, a light vacuum may prevail within the entire pulsation reactor 1. Thus, a leakage of a product into an environment is prevented.

For the method, the two-substance nozzle is used to feed the raw material RM and the carrier fluid over at least one of the feed locations FL1 to FLn into the treatment zone of the e.g. pulsating hot gas stream HSG in the pulsation reactor 1. In the exemplary case, it is a two-substance nozzle made of stainless steel with a vale diameter, exemplary a vale diameter between 0.5 and 5 mm. Other types of a nozzle are conceivable. Through the two-substance nozzle, the liquid raw material RM is fed over at least one feed location F1 to FLn into the treatment zone of the reaction space section 5 and/or the combustion chamber 3 with the gaseous carrier fluid in sprayed form. For the transport of the raw material RM and the carrier fluid through the two-substance nozzle, for example, a membrane pump can be used.

The raw material RM is heated to a predetermined temperature, e.g. to a temperature of at least 60 °C, during and/or immediately prior to feeding into the pulsation reactor 1, in particular into the hot gas stream HGS. This prevents crystallization in the feeding system, for example in the nozzle. Moreover, heating of the raw material RM to 100 °C and above is prevented to avoid the evaporation of the liquid in the raw material RM. Preferably the raw material RM is heated to a temperature of at most 80 °C. Thus, evaporation of the liquid in the raw material RM is prevented.

In an exemplary embodiment, a desired or predetermined temperature of the raw material RM is set during and/or prior to feeding of the raw material RM into the treatment zone. In particular, the temperature of the raw material RM can be measured and controlled during and/or prior to feeding into the reactor 1. In the event that the measured temperature of the raw material RM during and/or prior to feeding into the reactor 1 is below the desired or predetermined temperature, intermediate heating are provided in preparation or feeding structures, e.g. by hot plate and/or heating jacket thermally coupled to a feeding structure, like a heated pipe, or heated nozzle, and/or preparation structure, like a heated mixing unit, and/or reactor wall. For instance, the temperature of the raw material RM may be increased to the predetermined temperature or kept at the predetermined temperature by such intermediate heating. For this purpose, temperature sensors are mounted to the preparation and/or feeding structure and a control unit is provided which controls the heating components, e.g. heated pipe, heated nozzle, of the preparation and/or feeding structure depending on the measured temperature of the raw material RM within the preparation and/or feeding structure to increase or keep the predetermined temperature of the raw material.

In an exemplary embodiment, the heating of the raw material RM takes place, for example, by a solution heat of zinc oxide. The solution heat is formed by dissolving zinc compounds in a liquid. In the case that the temperature is not high enough, there is an increase or a hold of the temperature by, for example, a hot plate, a heating jacket and/or a tempered and/or double-walled container. The solution can be stirred continuously and can be covered against the atmosphere.

Likewise, the carrier fluid is heated to a temperature of at least 35 °C and at most to the temperature of the raw material RM during and/or immediately prior to feeding into the pulsation reactor 1. Thereby, a temperature difference between the raw material RM and the carrier fluid is reduced, whereby crystallization of the zinc compounds from the raw material RM in the two-substance nozzle and/or outside the combustion chamber 3 is prevented.

The raw material RM comprises a liquid, in which zinc is present in dissolved form. In the present example, an acetic acid solution is added to demineralized water. Subsequently, zinc oxide was dissolved in the diluted acetic acid solution. However, other zinc-containing solutions and their production methods are also conceivable. In the present example, a 60% acetic acid was used for the preparation of the raw material RM, wherein the acetic acid, the demineralized water and the zinc oxide were mixed, wherein a mass ratio of the acetic acid to demineralized water to zinc oxide is about 7:5: at most 3. Table 1 lists further mixing ratios of the raw material RM, in which a maximum of zinc oxide can be solved, e.g. completely solved until forming a transparent solution, under stirring within 30 minutes or less. The exemplary raw material RM is listed under Solution No. 1

**Table 1: Exemplary raw material RM composition**

| Solution No. | Water | Acetic Acid (60%) | ZnO Maximum solubility | | Temperature | Soluble after |
|---|---|---|---|---|---|---|
| | [g] | [g] | [g] | [%] | [° C] | [min] |
| 1 | 25 | 35 | 15 | 20 | 60 | 3 |
| 2 | 30 | 30 | 12.5 | 17.2 | 60 | 3 |
| 3 | 10 | 50 | 9 | 13 | 60 | 14 |

For the dissolution of zinc oxide in the diluted acetic acid solution, the diluted acetic acid solution can be preheated to 35 °C. In an exemplary case, the liquid is heated using a heating plate and/or one or more silicon rubber electrical heated bands. Other heating methods are conceivable. Subsequently, an addition of zinc oxide under stirring causes an exothermic reaction, which increases the temperature of the raw material RM to a temperature of 75 °C at most. Subsequently the temperature of the raw material RM is held at a temperature of at least 60 °C. Moreover, the temperature of the raw material RM is held at a temperature of 80 °C at most. In an exemplary case, the temperature of the raw material RM is held at a temperature of at most 80 °C during feeding into the pulsation reactor 1. Other durations before feeding into the pulsation reactor 1 are conceivable. Moreover, the raw material RM can be heated to a temperature of at least 70 °C and at most 80 °C during and/or prior to feeding into the pulsation reactor 1.

Exemplary zinc oxide particles formed are listed in Table 2. Solution No. 1 was used as a raw material RM for the exemplary zinc oxide nanoparticles. The specific surface area BET, carbon content and bulk density are stated.

**Table 2: Properties of exemplary zinc oxide nanoparticles**

| Exemplary Embodiment | BET specific surface area | Carbon content | Bulk density |
|---|---|---|---|
| | [m²/g] | [%w] | [g/m³] |
| 1 | 20 | 0.06 | 0.10 |
| 2 | 21 | 0.02 | 0.10 |
| 3 | 25 | 0.14 | 0.09 |
| 4 | 20 | 0.12 | 0.10 |

The specific surface area of the exemplary zinc oxide particles may be measured by the application of a BET-method, with the help of 3 points BET according to the standard DIN ISO 9277. The exemplary zinc oxide nanoparticles were heated at 200 °C for 30 min before measurement and show a specific surface area of 20 m²/g up to 25 m²/g.

The bulk density of the exemplary zinc oxide nanoparticles was determined with DIN EN 52110. The determined densities range between 0.09 g/cm³ and 0.1 g/cm³. Moreover, the carbon content of the exemplary zinc oxide nanoparticles ranges between 0.06% and 0.14% of the mass.

Furthermore, exemplary zinc oxide nanoparticles may be agglomerated with a primary particle size of 20 to 40 nm, with exemplary zinc oxide nanoparticles of the exemplary embodiment 1 showing particles with a primary particle size of 50 nm and above.

Moreover, primary particles of the zinc oxide nanoparticles of the exemplary embodiment 2, 3 and 4 measured with TEM show an average particle size between 30±2 nm up to 50±2 nm. The average particle size was obtained by measuring different rows of particles and by dividing the results by the number of the measured particles.

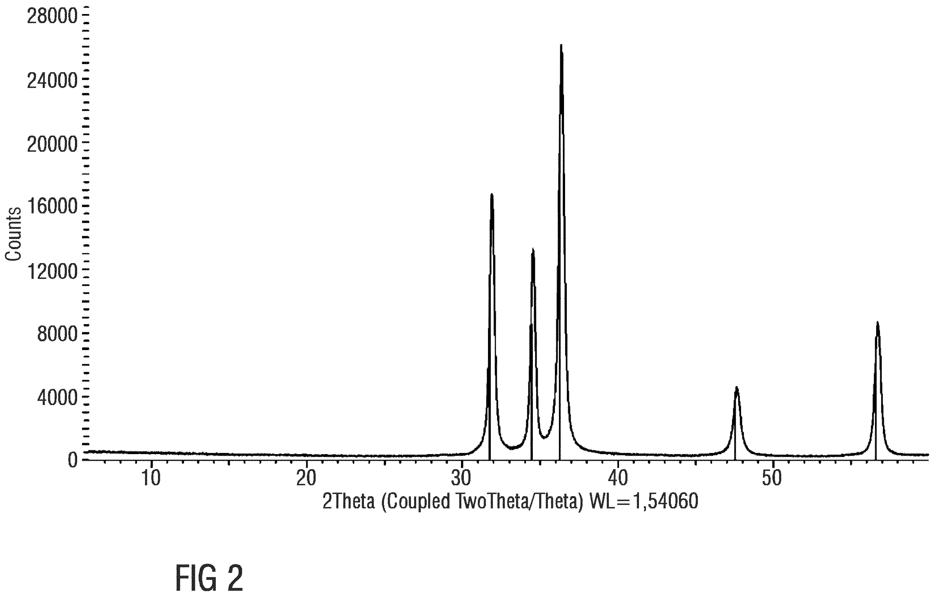

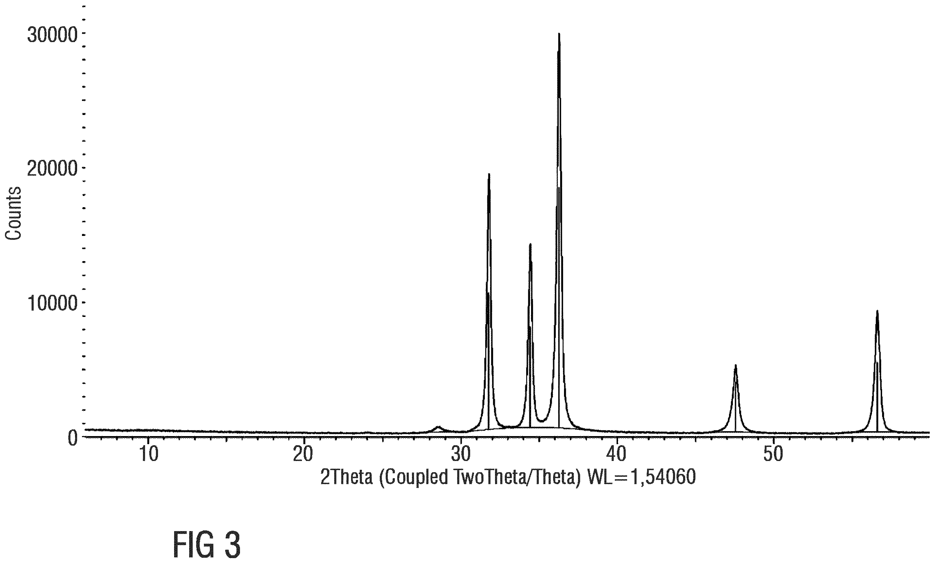

In addition, a phase structure of the exemplary zinc oxide nanoparticles may be identified by using an X-ray diffractometer by applying Ni filtered Cu Kα radiation. Spectrums of individual test points of zinc oxide nanoparticles are shown in **Figure 2** and **Figure 3**. Figure 2 shows the spectrum of a standard zinc oxide nanoparticle with a hexagonal zincite crystal structure and Figure 3 shows the diffractogram of the exemplary embodiment 5. Intensities of zinc oxide peaks are distinct and sharp and reflect a high crystallinity of the hexagonal zincite phase.

### List of References

- 1: Reactor
- 2: Burner
- 3: Combustion chamber
- 4: Feed
- 5: Reaction space section
- 6: Elbow pipe
- 6.1: Elbow area
- 7: Separation device
- 8: Cooling air system

- P: Particle
- CG: Combustion gas
- F: Fuel
- HGS: Hot gas stream
- FL1 to FLn: Feed location
- R: Flow direction
- E: Input line
- A: Output line
- RM: Raw material

- T1: Temperature control unit
- T2: Temperature control unit
- T3: Temperature control unit
- T4: Temperature control unit

## Claims

1. Method of producing zinc oxide particles (P), comprising the steps of
a) Feeding a zinc-containing solution as a raw material (RM) over at least one feed location (FL1 to FLn) into at least one treatment zone of a hot gas stream (HGS) in a reactor (1) and
b) Subjecting the raw material (RM) in the treatment zone to a thermal treatment by the hot gas stream (HGS) for formation of zinc oxide particles (P),
wherein the raw material (RM) is heated to a predetermined temperature during and/or prior to feeding into the hot gas stream (HGS) to feed respectively heated raw material (RM) into the reactor (1).

2. Method according to claim 1, wherein the raw material (RM) is heated to and/or held at a temperature of at least 60 °C during and/or prior to feeding into the reactor (1).

3. Method according to claim 1 and/or claim 2, wherein the raw material (RM) is heated to and/or held at a temperature of at most 80 °C during and/or prior to feeding into the reactor (1).

4. Method according to any one of the preceding claims, wherein the raw material (RM) is fed into the reactor (1) by using a carrier fluid.

5. Method according to claim 4, wherein the carrier fluid is heated to a temperature of at least 35 °C during and/or prior to feeding into the reactor (1).

6. Method according to claim 4 and/or claim 5, wherein the carrier fluid is heated at most to a temperature of the raw material (RM) during feeding into the reactor (1).

7. Method according to any one of the preceding claims, wherein the raw material (RM) is formed by dissolving zinc oxide in a liquid, wherein the liquid is heated to at least 30 °C prior to the addition of the zinc oxide.

8. Method according to claim 7, wherein the liquid is a mixture comprising an acetic acid and a demineralized water.

9. Method according to claim 8, wherein, if a 60% acetic acid is used, a mass ratio of the acetic acid to demineralized water to zinc oxide is about 7:5:at most 3.

10. Method according to claim 8, wherein a raw material (RM) of the zinc containing solution is a composition, comprising 28% ± 1% of acetic acid, 52% ± 1% of demineralized water and at most 20% ± 1% zinc oxide.

11. Method according to any one of the preceding claims, wherein the formation of zinc oxide particles (P) takes place in a treatment zone in a combustion chamber (3) of the reactor (1).

12. Method according to any one of the preceding claims, wherein further treatment of zinc oxide particles (P) takes place in a treatment zone in a resonance tube (5) of the reactor (1).

13. Method according to any one of the preceding claims, wherein the reactor (1) is a thermal reactor.

14. A reactor (1) for producing zinc oxide particles (P) using a method of any one of claims 1 to 13, the reactor (1) configured to generate a hot gas stream (HGS) and comprising:
- a treatment zone configured to be subjected to the hot gas stream (HGS),
- at least one feed location (FL1 to FLn) configured to feed a raw material (RM) into the hot gas stream (HGS), and
- means for heating the raw material (RM) during and/or prior to feeding into the hot gas stream (HGS).

15. The reactor (1) of claim 14, wherein the at least one feed location (FL1 to FLn) is configured to feed a carrier fluid carrying the raw material (RM) into the reactor (1), wherein a heater is arranged for heating the carrier fluid during and/or prior to feeding into the reactor (1).
